# EUROPÄISCHE PATENTSCHRIFT

(11) **EP 2 607 162 B1**
(45) Veröffentlichungstag und Bekanntmachung des Hinweises auf die Patenterteilung: **17.07.2019**
(21) Anmeldenummer: 12198100.5
(22) Anmeldetag: 19.12.2012
(51) Int. Cl.: B60P 7/08

(54) **Verfahren zum Herstellen und/oder Umbauen einer Befestigungseinrichtung zum Festlegen von Ladegut in einem Frachtraum**
Method for producing and/or converting a fixing device for fixing cargo in a cargo space
Procédé de fabrication et/ou de transformation d'un dispositif de fixation destiné à fixer des marchandises de chargement dans une soute

(30) Priorität: 20.12.2011 DE 102011056722
(43) Veröffentlichungstag der Anmeldung: 26.06.2013
(73) Patentinhaber: allsafe GmbH & Co. KG, 78234 Engen (DE)
(72) Erfinder: Lohmann, Detlef, 78234 Engen (DE); Moll, Hubert, 78333 Stockach (DE); Stubbe, Ingolf, 78244 Gottmadingen (DE)
(74) Vertreter: Patentanwälte und Rechtsanwalt Weiß, Arat & Partner mbB

(56) Entgegenhaltungen:
- EP-A1- 2 206 623
- EP-A1- 2 239 162
- US-B1- 7 980 798

## Beschreibung

Die Erfindung betrifft ein Verfahren zum Herstellen und/oder Umbauen einer Befestigungseinrichtung zum Festlegen von Ladegut in einem Frachtraum entsprechend dem Oberbegriff von Anspruch 1, sowie einen Bausatz zur Durchführung dieses Verfahrens und entsprechende Befestigungseinrichtungen.

### Stand der Technik

Derartige Befestigungseinrichtungen sind in vielfältiger Form und Ausführung bekannt und auf dem Markt.

In diesem Zusammenhang wird auf die US 7 980 798 B1 verwiesen. Dort ist eine Befestigungseinrichtung zum Bewegen und Festlegen in einer Schiene beschrieben.

Nur beispielsweise wird auf die EP 1 794 053 A1 verwiesen, in der eine Vorrichtung zum Festlegen eines Gegenstandes an einer Schiene mittels eines Fittings aufgezeigt ist, der mit einem Gleitkörper entlang der Schiene in einer Nut bewegbar ist und einen Retainer aufweist, der in zumindest eine seitliche Nutmulde in der Schiene absenkbar ist, wobei der Retainer über ein drehbares Verbindungselement mit dem Gleitkörper verbunden ist. Dabei stützt sich der Retainer gegenüber dem Gleitkörper und/oder gegenüber dem Drehelement über zumindest einen Kraftspeicher ab und hält den unter Druck stehenden Retainer in zumindest zwei Höhenlagen gegenüber der Schiene fest.

Ein ähnlicher Gleitkörper, der entlang einer Schiene geführt ist und in dem ein Bolzen zum Einfahren in eine Schienenausnehmung integriert ist, der unter dem Druck einer Feder in Rastlage gehalten wird, ist beispielsweise aus der DE 203 06 549 U1 bekannt.

Auch aus der DE 10 2005 001 202 A1 ist eine Vorrichtung zum zeitweiligen Verbinden eines Gegenstandes mit einem Halte- oder Schienenprofil bekannt, in dem etwa parallel zu dessen Längsachse eine hinterschnittene Längsnut verläuft, die mit in axialem Abstand zueinander angeordneten Bohrungen versehen ist, zwischen denen jeweils ein Paar von die Längsnut seitlich begrenzenden und deren Hinterschneidungsbereich übergreifenden Nutkanten angeordnet ist. Dabei soll in die Längsnut ein Einsatzelement verriegelbar und lösbar einsetzbar sein, wobei das als Zwischenglied dienende Einsatzelement in einander benachbarte Bohrungen des Schienenprofils so einsetzbar ausgebildet ist, dass eine plattenartige Haltefläche die Oberfläche des Schienenprofils überragt und andererseits zumindest ein Kragorgan des Einsatzelementes die Unterfläche der die Nutkanten bildenden Formrippen des Schienenprofils untergreift.

### Aufgabe

Aufgabe der vorliegenden Erfindung ist es, ein Verfahren, einen Bausatz zur Durchführung dieses Verfahrens und entsprechende Befestigungseinrichtungen anzubieten, die äusserst vielseitig anwendbar sind und mit einem Minimum an Einzelteilen ein Maximum an Funktionen und Produkten erzielen, wodurch Kosten in erheblichem Masse gesenkt werden können.

### Lösung der Aufgabe

Zur Lösung der Aufgabe führen die Merkmale der Ansprüche 1, 8, 9, 13 und/oder 15.

Grundgedanke der vorliegenden Erfindung ist es, Befestigungseinrichtungen der o.g. Art zu schaffen, die aus möglichst wenigen einzelnen unterschiedlichen Elementen zusammengestellt sind, jedoch unterschiedlichen Anforderungen Rechnung tragen können. Je nach diesen unterschiedlichen Anforderungen können die Befestigungseinrichtungen zusammengebaut und dem Kunden zur Verfügung gestellt werden. Die Anforderungen gehen zum einen von den Schienen selbst aus. Das bedeutet, dass die Basiselemente diesen Schienen angepasst sein müssen. Bei der heutigen Befestigungstechnik vor allem in Frachträumen von Fahrzeugen werden beispielsweise sogenannte Airline-Schienen oder Schlüsselloch-Schienen verwendet. Je nach deren Ausgestaltung ist auch das Basiselement ausgebildet.

Aber auch die Retainer richten sich nach diesen Schienen. Ein Retainer, der dem Festlegen des Basiselementes in einer Airline-Schiene dient, hat eine andere Ausgestaltung, als ein Retainer für beispielsweise eine Schlüsselloch-Schiene. Hier soll allerdings vom Erfindungsgedanken umfasst sein, dass der Retainer aus einem immer gleichbleibenden Grundkörper besteht, in den nur ein unterschiedliches Riegelelement eingesetzt wird, je nach dem, ob die Befestigungseinrichtung für eine Airline-Schiene oder für eine Schlüsselloch-Schiene geeignet ist.

Der Retainer dient dazu, das Basiselement gegenüber der Schiene festzulegen. Aus diesem Grunde ist der Retainer in der Regel gegenüber dem Basiselement vertikal verschiebbar ausgebildet. In Riegelstellung fährt er mit entsprechenden Riegelfüsschen in Ausnehmungen der Schiene ein, allerdings soll er dann auch wieder vertikal anhebbar ausgestaltet sein, damit diese Riegelstellung gelöst werden kann. Das Ganze geschieht bevorzugt gegen die Kraft eines Kraftspeichers, beispielsweise gegen die Kraft einer Schraubenfeder.

Wiederum verschiedene Ausgestaltungen können die Verbindungselemente erfordern. Es gibt Verbindungselemente, an denen beispielsweise ein Zurrgurt festgelegt werden soll. In diesem Fall ist das Verbindungselement als Bügel ausgestaltet. Andere Verbindungselemente sollen einen Bolzen besitzen, der in ein Sackloch in dem Ladegut eingesetzt werden soll. Andere Verbindungselemente sind balkenschuhartig, beispielsweise für Sperrbalken ausgebildet. Hier sind sehr viele Möglichkeiten denkbar, die von der vorliegenden Erfindung umfasst sein sollen.

Erfindungsgemäss ist aber allen Verbindungselementen gemeinsam, dass sie bevorzugt durch einen Stift mit dem Basiselement verbunden werden. Hierzu greift das Verbindungselement zwischen zwei Laschen des Basiselementes ein, wobei ein Durchlass des Verbindungselementes mit jeweils einer Öffnung in der Lasche kongruiert. Durch diese beiden Öffnungen und den Durchlass im Verbindungselement kann ein Stift gesteckt werden.

Bevorzugt ist der Stift als Spannstift ausgelegt. Hierzu besitzt er beispielsweise einen Längsschlitz, wodurch ein Durchmesser des Stiftes verringert werden kann. Sitzt der Stift dann in Riegellage, spreizt er sich wieder auf, wodurch ein Klappern von Verbindungselement gegenüber Basiselement vermieden wird.

Des weiteren soll dieser Stift endwärtig eine Öffnung zur Aufnahme einer Kennzeichnung aufweisen. Dies kann beispielsweise ein Firmenlogo einer bestimmten Firma, insbesondere der Firma, die die Befestigungseinrichtung verwendet, sein.

Denkbar ist natürlich auch, dass der Stift als Schnellverschluss ausgebildet ist. Beispielsweise kann der Stift als Inbus ausgebildet sein und einen bestimmten Querschnitt aufweisen, der mit einem dazu passenden Querschnitt der Durchlässe zusammenwirkt, so dass eine Verspannung stattfindet. Hier sind viele Möglichkeiten denkbar und sollen von der vorliegenden Erfindung umfasst sein.

Von der Erfindung umfasst ist auch ein Bausatz aus den verschiedenen o.g. Elementen zur Durchführung des Verfahrens. Dieser Bausatz besitzt eine Mehrzahl von unterschiedlichen Basiselementen und Retainern, welche für unterschiedliche Schienen vorgesehen sind, sowie eine Mehrzahl von unterschiedlichen Verbindungselementen für unterschiedliche Ladegüter.

Desgleichen soll von dem Erfindungsgedanken auch eine Befestigungseinrichtung umfasst sein, die nach dem erfindungsgemässen Verfahren hergestellt wurde.

Speziell Schutz begehrt wird für eine Befestigungseinrichtung, bei der das Verbindungselement auf die oben beschriebene Art und Weise mit dem Basiselement verbunden ist, d.h., bei der das Basiselement zumindest zwei, bevorzugt vier kongruierende Öffnungen aufweist und das Verbindungselement zwischen die zumindest zwei, bevorzugt vier Öffnungen eingreift und einen die Öffnungen verbindenden Durchlass aufweist, wobei ein Stift durch die Öffnungen und den Durchlass eingesetzt ist.

Ferner wird separat Schutz auch für eine Befestigungseinrichtung begehrt, bei der der Retainer einen Grundkörper aufweist, in den ein Einsatz mit Riegelelementen eingesetzt ist. Dies hat nämlich den weiteren Vorteil, dass hier der Grundkörper aus Kunststoff hergestellt sein kann, da er ausser der Führung des Riegelelementes keine weitere Aufgabe hat. Zumindest ist er keinen Belastungen ausgesetzt. Die übrigen Teile der Befestigungseinrichtung, mit Ausnahme des Widerlagers, werden dagegen aus Festigkeitsgründen aus Metall geformt, insbesondere gegossen. Dies gilt für Basiselement, Riegelelement und Verbindungselement.

Separat Schutz begehrt wird ferner auch für eine Befestigungseinrichtung, bei der das Verbindungselement einen kardanisch bewegbaren Kopf aufweist. Hier besteht das Verbindungselement aus einem Brückenelement, von dem ein Drehstück aufragt, das gegenüber dem Brückenelement drehbar ist. Diesem Drehstück sitzt dann wiederum ein gabelförmiger Hut auf, der um eine waagrechte Achse gegenüber dem Drehstück drehbar ist.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
**Figur 1** eine perspektivische Ansicht einer erfindungsgemäßen Befestigungseinrichtung zum Festlegen von Ladegut in einem Frachtraum in Explosionsdarstellung;;
**Figur 2 bis 5** perspektivische Ansichten von weiteren Befestigungseinrichtungen zum Festlegen von Ladegut in einem Frachtraum oder von Teilen davon in Explosionsdarstellung.

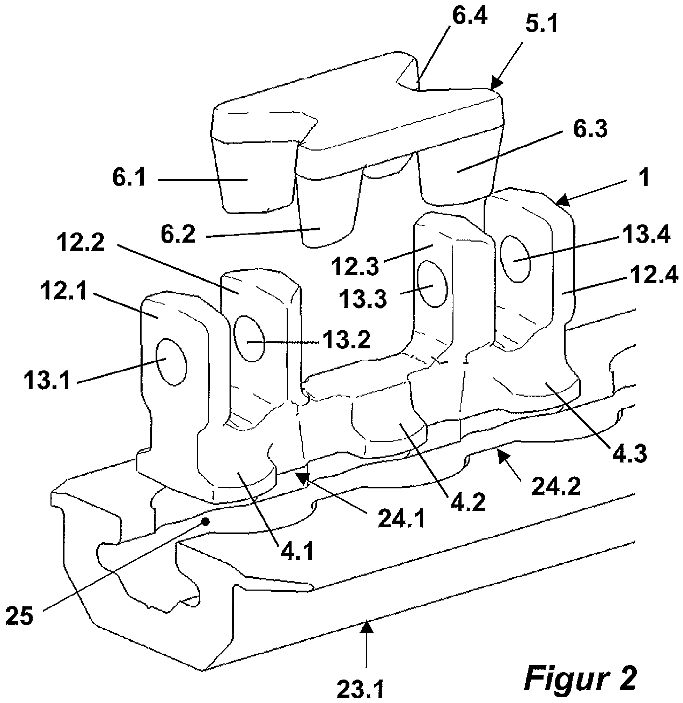

Eine erfindungsgemässe Befestigungseinrichtung P1 zum Festlegen von Ladegut in einem Frachtraum weist ein Basiselement 1 zum Einsetzen in eine in Figur 2 gezeigte Schiene 23.1 sowie einen Retainer 2 zum Verriegeln des Basiselements 1 an der Schiene und ein Verbindungselement 3 zu dem Ladegut auf. Im vorliegenden Fall ist das Basiselement 1 zum Einsetzen in eine sogenannte Airline-Schiene 23.1 bestimmt, wie diese z.B. in der DE 100 36 553 A1 beschrieben ist. Diese Airline-Schiene ist durch sich gegenüberliegende wellenförmige Nutenränder 24.1 und 24.2 gekennzeichnet, welche Einsatzöffnungen 25 für Klemmfüsse 4.1, 4.2 und 4.3 ausbilden, wobei das Basiselement 1 entlang der Schienennut verschoben werden kann und dabei die Klemmfüsse 4.1 bis 4.3 unter Bereiche zwischen den Einsatzöffnungen gelangen, wodurch das Basiselement 1 in der Airline-Schiene festgelegt wird. Diese Position wird dann durch ein Riegelelement 5.1 gesichert, das wiederum Riegelfüsschen 6.1 bis 6.4 aufweist, die in benachbarte Einsatzöffnung der Airline-Schiene einfahren. Dies geschieht unter dem Druck einer Schraubenfeder 7. Die Riegelfüsschen 6.1-6.4 sind zumindest teilweise der Konturen der Einsatzöffnung angepasst und nach unten konisch zulaufend ausgebildet, wodurch das gesamte Befestigungselement P1 ziemlich klapperfrei an der Schiene 23 festgelegt wird.

Gemäss der vorliegenden Erfindung ist dabei das Riegelelement 5.1 in einen Grundkörper 8 des Retainers 2 eingesetzt und der ganze Retainer 2 zusammen mit dem Riegelelement 5.1 vertikal entlang dem Basiselement 1 führbar. Hierzu kann - nicht gezeigt - ein Führungselement, z.B. ein Zapfen, eine entsprechende Führungsöffnung in dem Riegelelement 5.1 durchsetzen.

Die Schraubenfeder 7 drückt einerseits auf das Riegelelement 5.1, andererseits stützt sie sich gegen ein Widerlager 11 ab, welches zusammen mit dem Verbindungselement 3 an dem Basiselement 1 festgelegt wird. Zu diesem Zweck ragen von dem Basiselement 1 vier Laschen 12.1 bis 12.4 auf, die jeweils eine Öffnung 13.1 bis 13.4 besitzen. Ebenso besitzt das Verbindungselement 3 bzw. ein bügelartiger Körper 18 in seinen Endbereichen jeweils einen Durchlass 14.1 und 14.2, welche in Gebrauchslage zwischen jeweils zwei Laschen 12.1, 12.2 bzw. 12.3, 12.4 angeordnet sind und mit den Öffnungen 13.1, 13.2 bzw. 13.3, 13.4 kongruieren. Gesichert wird dabei das Verbindungselement 3 mittels Stiften 15.1 und 15.2, welche durch die Öffnung 13.1, den Durchlass 14.1 und die Öffnung 13.2 sowie eine Öffnung 13.4, 14.2, und 13.3 eingesetzt werden. Diese Stifte sind als Spannstifte ausgebildet. Hierzu weisen sie beispielsweise einen nicht näher gezeigten Längsschlitz auf, wodurch beim Einsetzen der Stifte 15.1 bzw. 15.2 deren Durchmesser verringert werden kann, während sie sich dann in Gebrauchslage aber aufspreizen und so in den Öffnungen bzw. Durchlässen verspannen.

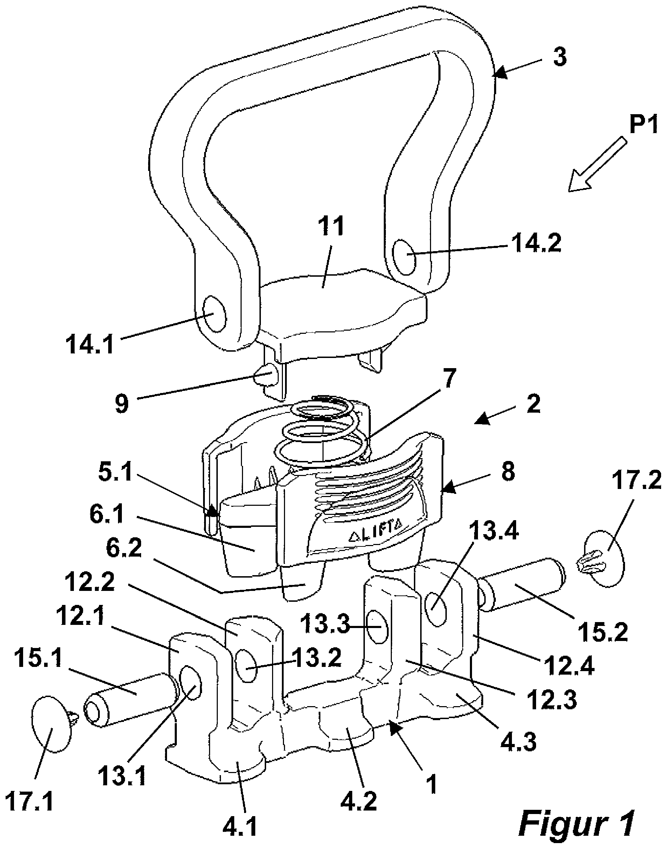

Diesen Stiften 15.1 bzw. 15.2 kann endwärtig eine Kennzeichnung 17.1 bzw. 17.2 zugeordnet werden, was der Einfachheit halber dadurch geschieht, dass entsprechende Fortsätze an den Kennzeichnungen 17.1 bzw. 17.2 in die vordere Öffnung der hülsenförmigen Stifte 15.1 bzw.15.2 eingeschoben werden. In die jeweils hintere Öffnung der Stifte 15.1 bzw. 15.2 kann dann ein Zapfen 9 des Widerlagers 11 eingesetzt werden, wodurch dieses ebenfalls gegenüber dem Basiselemente 1 festgelegt wird. In Figur 1 ist nur ein Zapfen 9 dargestellt.

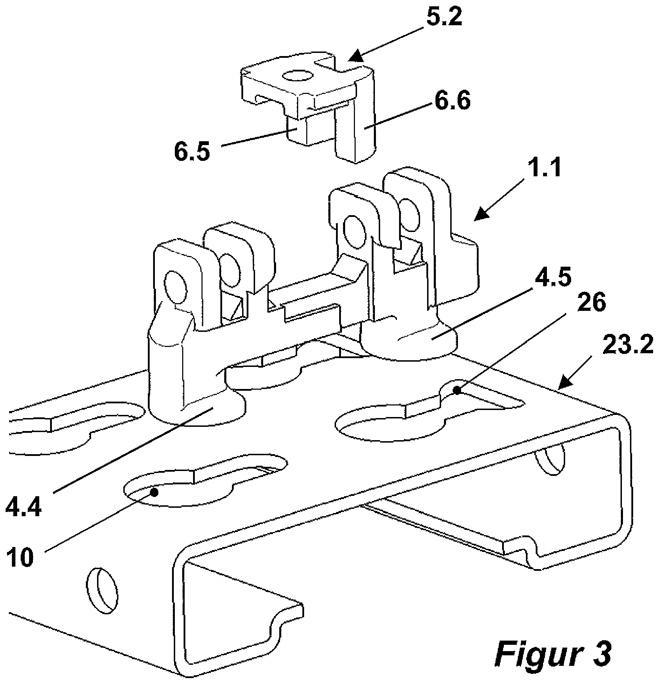

Ein weiteres Basiselement 1.1 gemäss Figur 3 unterscheidet sich von dem Basiselement 1 dadurch, dass es für eine sogenannte Schlüsselloch-Schiene 23.2 geeignet ist. Diese Schlüsselloch-Schiene ist durch beabstandete schlüssellochartige Ausnehmung 10 gekennzeichnet, wobei das Basiselement 1.1 zumindest zwei Klemmfüsse 4.4 und 4.5 aufweist, welche in den grösseren Teil der Schlüsselloch-Ausnehmung 10 eingesetzt werden. Durch ein axiales Verschieben untergreifen dann diese Klemmfüsse 4.4 und 4.5 den schmaleren Bereich des Schlüssellochs.

Ein entsprechendes Riegelelement 5.2 zum Einsetzen in den Grundkörper 8 des Retainers 2 besitzt dann auch nur zwei Riegelfüsschen 6.5 und 6.6, die in Riegellage in einen entsprechend geformten Teil 26 des Schlüssellochs eingreifen, in den der Klemmfuss 4.5 eingesetzt wurde.

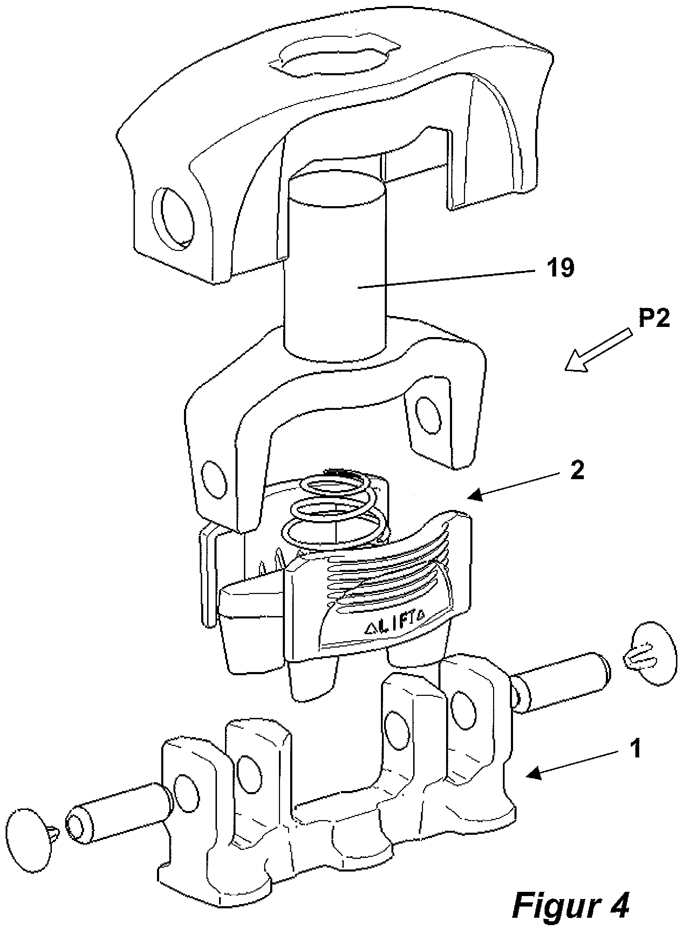

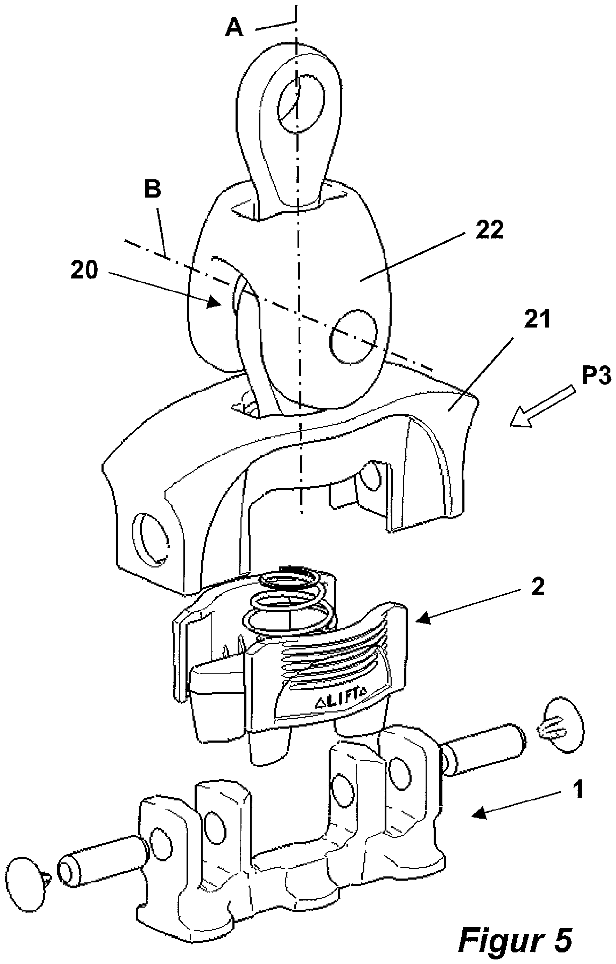

In Figur 4 und 5 sind verschiedene Verbindungselemente für entsprechende Befestigungseinrichtungen P2 und P3 angedeutet. Ein Verbindungselement 3.1 ist brückenartig ausgebildet und weist einen aufragenden Bolzen 19 auf, an den ein beliebiges Element zum Festlegen des Ladeguts angeordnet sein kann. Denkbar ist auch, dass ein Teil des Ladeguts ein Sackloch aufweist, in welches der Bolzen 19 passt.

Das Verbindungselement 3.2 gemäss Figur 5 besitzt einen kardanischen Kopf 20, der gegenüber einem Brückenelement 21 um eine Vertikalachse A drehbar ist. Ein gabelförmiger Hut 22 ist um eine Horizontalachse B drehbar.

Die Funktionsweise der vorliegenden Erfindung ist folgende:
Für Befestigungseinrichtungen P1 bis P3 wird ein Bausatz aus Basiselementen 1, 1.1, Retainer 2 aus Grundkörper 8 mit unterschiedlichen Riegelelementen 5.1 und 5.2 sowie Verbindungselementen 3, 3.1 und 3.2 gebildet. Je nach Wunsch des Kunden bzw. Anforderungen der Frachträume werden die Basiselemente 1, 1.1 ausgesucht. Ist im Frachtraum eine Airline-Schiene 23.1 vorhanden oder vorgesehen, so werden die Basiselemente 1 ausgesucht. Ist dagegen eine Schlüsselloch-Schiene 23.2 vorhanden oder vorgesehen, wird das Basiselement 1.1 gewählt. Das gleiche gilt auch für das Riegelelement 5.1 bzw. 5.2, wobei hier der Grundkörper 8 des Retainers der gleiche ist. Dieser Grundkörper 8 besitzt eine Rast- oder Schnappeinrichtung, in die je nach Anforderung das Riegelelement 5.1 oder das Riegelelement 5.2 eingesetzt werden kann.

Der Retainer 2 mit dem jeweiligen Riegelelement 5.1 oder 5.2 wird nun in das Basiselement 1 bzw. 1.1 eingesetzt und kann vertikal gegenüber dem Basiselement 1 bzw. 1.1 bewegt werden.

Anschliessend wird die Schraubenfeder 7 in den Retainer 2 eingesetzt und stützt sich nach unten gegen das Riegelelement 5.1 bzw. 5.2 ab.

Nunmehr wird ein gewünschtes Verbindungselement 3, 3.1 bzw. 3.2 ausgewählt. Beim Verbindungselement 3 erfolgt auch der Zusatz des Widerlagers 11 zum Abstützen gegenüber der Schraubenfeder 7. Die anderen Verbindungselemente 3.1 und 3.2 stützen sich selbst gegen die Schraubenfeder 7 ab.

Die Verbindungselemente 3, 3.1 und 3.2 werden so auf das Basiselement 1 bzw. 1.1 aufgesetzt, dass sie jeweils zwischen zwei Laschen 12.1 und 12.2 bzw. 12.3, 12.4 eingreifen und die entsprechenden Durchlässe 14.1 und 14.2 mit den Öffnungen 13.1 bis 13.4 kongruieren. Danach werden die Stifte 15.1 und 15.2 durch die Öffnungen und die Durchlässe hindurchgeschoben und verbinden so die Verbindungselemente 3, 3.1, 3.2 mit den Basiselementen 1, 1.1. Zum Schluss können dann die Kennzeichnungen 17.1 bzw. 17.2 in die Stifte 15.1 bzw. 15.2 eingesetzt werden.

**Bezugszeichenliste**

| | | | | | |
|---|---|---|---|---|---|
| 1 | Basiselement | 34 | | 67 | |
| 2 | Retainer | 35 | | 68 | |
| 3 | Verbindungselement | 36 | | 69 | |
| 4 | Klemmfuß | 37 | | 70 | |
| 5 | Riegelelement | 38 | | 71 | |
| 6 | Riegelfu ß | 39 | | 72 | |
| 7 | Schraubenfeder | 40 | | 73 | |
| 8 | Grundkörper | 41 | | 74 | |
| 9 | Zapfen | 42 | | 75 | |
| 10 | Ausnehmung | 43 | | 76 | |
| 11 | Widerlager | 44 | | 77 | |
| 12 | Lasche | 45 | | 78 | |
| 13 | Öffnung | 46 | | 79 | |
| 14 | Durchlass | 47 | | | |
| 15 | Stift | 48 | | | |
| 16 | Öffnung | 49 | | | |
| 17 | Kennzeichnung | 50 | | A | Vertikalachse |
| 18 | Körper | 51 | | B | Horizontalachse |
| 19 | Bolzen | 52 | | | |
| 20 | kardanischer Kopf | 53 | | | |
| 21 | Brückenelement | 54 | | | |
| 22 | Hut | 55 | | | |
| 23 | Schiene | 56 | | | |
| 24 | Nutenrand | 57 | | | |
| 25 | Einsatzöffnung | 58 | | P | Befestigungselement |
| 26 | Teil | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zum völlig variablen Herstellen und Umbauen einer Befestigungseinrichtung (P1, P2, P3) zum Festlegen von Ladegut in einem Frachtraum, wobei die Befestigungseinrichtung in einer Schiene (23.1, 23.2) festgelegt wird,
**dadurch gekennzeichnet, dass**
- mindestens ein zentraler Retainer (2), welcher in allen Varianten erhalten bleibt,
- mindestens ein variables Basiselement (1, 1.1), um die Verbindung zur Schiene (23.1, 23.2) darzustellen und
- mindestens ein variables Verbindungselement (3, 3.1, 3.2), um den Ladungssicherungsfall zu ermöglichen,
je nach unterschiedlichen Anforderungen zusammengebaut werden.

2. Verfahren nach Anspruch 1, **dadurch gekennzeichnet, dass** die Befestigungseinrichtung aus dem in die Schiene einsetzbaren und in und/oder an ihr festlegbaren Basiselement (1, 1.1), dem Retainer (2) und dem Verbindungselement (3, 3.1, 3.2) zu dem Ladegut zusammengesetzt wird, wobei dem Basiselement (1, 1.1) der Retainer (2) zum Verriegeln des Basiselements gegenüber der Schiene zugeordnet wird.

3. Verfahren nach Anspruch 2, **dadurch gekennzeichnet, dass** aus einer Mehrzahl von Basiselementen (1, 1.1) und Retainer (2), welche für unterschiedliche Schienen (23.1, 23.2) vorgesehen sind, diejenigen ausgewählt werden, die für die gewünschte Schiene bestimmt sind und danach mit dem für das Ladegut infrage kommenden Verbindungselement (3, 3.1, 3.2) verbunden werden.

4. Verfahren nach Anspruch 2 oder 3, **dadurch gekennzeichnet, dass** der Retainer (2) aus einem gleichbleibenden Grundkörper (8) besteht, in den ein für die Verriegelung des Basiselements (1, 1.1) mit der Schiene bestimmtes Riegelelement (5.1, 5.2) eingesetzt wird.

5. Verfahren nach wenigstens einem der Ansprüche 2 - 4, **dadurch gekennzeichnet, dass** zwischen den Retainer (2) und das Verbindungselement (3, 3.1, 3.2) ein Kraftspeicher (7) eingesetzt wird.

6. Verfahren nach wenigstens einem der Ansprüche 2 - 5, **dadurch gekennzeichnet, dass** die Verbindung von Verbindungselement (3, 3.1, 3.2) und Basiselement (1, 1.1) mit zumindest einem Stift (15.1, 15.2) od.dgl. durchgeführt wird.

7. Verfahren nach Anspruch 6, **dadurch gekennzeichnet, dass** dem Stift (15.1, 15.2) eine Kennzeichnung (17.1, 17.2) zugeordnet wird.

8. Bausatz zur Durchführung des Verfahrens nach wenigstens einem der Ansprüche 1 - 7, **gekennzeichnet durch** eine Mehrzahl von unterschiedlichen Basiselementen (1, 1.1) und Retainer (2), welche für unterschiedliche Schienen (23.1, 23.2) vorgesehen sind, sowie mit einer Mehrzahl von unterschiedlichen Verbindungselementen (3, 3.1, 3.2) für unterschiedliche Ladegüter.

9. Befestigungseinrichtung zum Festlegen von Ladegut in einem Frachtraum, die aus einem in eine Schiene (23.2, 23.2) einsetzbaren und in und/oder an ihr festlegbaren Basiselement (1, 1.1) und einem Verbindungselement (3, 3.1, 3.2) zu dem Ladegut besteht, wobei dem Basiselement ein Retainer (2) zum Verriegeln des Basiselements (1, 1.1) gegenüber der Schiene zugeordnet ist, wobei das Basiselement (1, 1.1) zumindest zwei, bevorzugt vier, kongruierende Öffnungen (13.1 - 13.4) aufweist und das Verbindungselement (3, 3.1, 3.2) zwischen die zumindest zwei, bevorzugt vier, Öffnungen auf 13.1 - 13.4) eingreift und einen die Öffnungen verbindenden Durchlass (14.1, 14.2) aufweist, wobei ein Stift (15.1, 15.2) durch die Öffnungen und den Durchlass eingesetzt ist.

10. Befestigungseinrichtung nach Anspruch 9, **dadurch gekennzeichnet, dass** vom Basiselement (1, 1.1) zumindest zwei, bevorzugt vier, Laschen (12.1 - 12.4) aufragen, welche die Öffnungen (13.1 - 13.4) aufweisen und zwischen die das Verbindungselement (3, 3.1, 3.2) eingreift.

11. Befestigungseinrichtung nach Anspruch 9 oder 10, **dadurch gekennzeichnet, dass** der Stift (15.1, 15.2) einen Längsschlitz aufweist.

12. Befestigungseinrichtung nach wenigstens einem der Ansprüche 9 - 11, **dadurch gekennzeichnet, dass** der Stift (15.1, 15.2) als Hülse ausgebildet ist und endwärtig eine Öffnung zur Aufnahme einer Kennzeichnung (17.1, 17.2) aufweist.

13. Befestigungseinrichtung zum Festlegen von Ladegut in einem Frachtraum, die aus einem in eine Schiene (23.1, 23.2) einsetzbaren und in und/oder an ihr festlegbaren Basiselement (1, 1.1) und einem Verbindungselement (3, 3.1, 3.2) zu dem Ladegut besteht, wobei dem Basiselement ein Retainer (2) zum Verriegeln des Basiselements (1, 1.1) gegenüber der Schiene zugeordnet ist, wobei der Retainer (2) einen Grundkörper (8) aufweist, in den ein Riegelelement (5.1, 5.2) eingesetzt ist.

14. Befestigungseinrichtung nach Anspruch 13, **dadurch gekennzeichnet, dass** der Retainer (2) entlang dem Basiselement (1, 1.1) vertikal führbar ist.

15. Befestigungseinrichtung zum Festlegen von Ladegut in einem Frachtraum, die aus einem in eine Schiene (23.1, 23.2) einsetzbaren und in und/oder an ihr festlegbaren Basiselement (1, 1.1) und einem Verbindungselement (3, 3.1, 3.2) zu dem Ladegut besteht, wobei dem Basiselement ein Retainer (2) zum Verriegeln des Basiselements gegenüber der Schiene zugeordnet ist, wobei das Verbindungselement (3.2) einen kardanisch bewegbaren Kopf (20) aufweist.

## Claims

1. Method for the completely variable manufacture and conversion of a fastening device (P1, P2, P3) for fixing cargo in a cargo space, the fastening device being fixed in a rail (23.1, 23.2),
**characterised in that**
- at least one central retainer (2), which is retained in all variants,
- at least one variable base element (1, 1.1) to represent the connection to the rail (23.1, 23.2) and
- at least one variable connecting element (3, 3.1, 3.2) to enable the load securing case,
can be assembled according to different requirements.

2. Method according to claim 1, **characterized in that** the fastening device is consisted of the base element (1, 1.1) which can be inserted into the rail and fixed in and/or to it, the retainer (2) and the connecting element (3, 3.1, 3.2) to form the load, the retainer (2) being assigned to the base element (1, 1.1) for locking the base element relative to the rail.

3. Method according to claim 2, **characterized in that**, from a plurality of base elements (1, 1.1) and retainers (2) provided for different rails (23.1, 23.2), those intended for the desired rail are selected and then connected to the connecting element (3, 3.1, 3.2) suitable for the load.

4. Method according to claim 2 or 3, **characterised in that** the retainer (2) consists of a constant basic body (8) into which a locking element (5.1, 5.2) intended for locking the basic element (1, 1.1) to the rail is inserted.

5. Method according to at least one of claims 2 - 4, **characterized in that** a force accumulator (7) is inserted between the retainer (2) and the connecting element (3, 3.1, 3.2).

6. method according to at least one of claims 2 - 5, **characterized in that** the connection of connecting element (3, 3.1, 3.2) and base element (1, 1.1) is carried out with at least one pin (15.1, 15.2) or the like.

7. Method according to claim 6, **characterized in that** a marking (17.1, 17.2) is assigned to the pin (15.1, 15.2).

8. Assembly for carrying out the method according to at least one of claims 1 - 7, **characterized by** a plurality of different base elements (1, 1.1) and retainers (2) which are provided for different rails (23.1, 23.2), and by a plurality of different connecting elements (3, 3.1, 3.2) for different load goods.

9. Fastening device for fixing goods to be loaded in a cargo space, which fastening device consists of a base element (1, 1.1) which can be inserted into a rail (23.2, 23.2) and fixed in and/or on it, and a connecting element (3, 3.1, 3.2) to the goods to be loaded, a retainer (2) for locking the base element (1, 1.1) relative to the rail being assigned to the base element, wherein the base element (1, 1.1) has at least two, preferably four, congruent openings (13.1 - 13.4) and the connecting element (3, 3.1, 3.2) engages between the at least two, preferably four, openings on 13.1 - 13.4) and has a passage (14.1, 14.2) connecting the openings, a pin (15.1, 15.2) being inserted through the openings and the passage.

10. Fastening device according to claim 9, **characterised in that** at least two, preferably four, lugs (12.1 - 12.4), which have the openings (13.1 - 13.4) and between which the connecting element (3, 3.1, 3.2) engages, project from the base element (1, 1.1).

11. Fastening device according to claim 9 or 10, **characterized in that** the pin (15.1, 15.2) has a longitudinal slot.

12. Fastening device according to at least one of claims 9 - 11, **characterized in that** the pin (15.1, 15.2) is designed as a sleeve and has an opening at the end for receiving a marking (17.1, 17.2).

13. Fastening device for fixing goods to be loaded in a cargo space, comprising a base element (1, 1.1) which can be inserted into a rail (23.1, 23.2) and fixed in and/or to it, and a connecting element (3, 3.1, 3.1).2) to the load, the base element being assigned a retainer (2) for locking the base element (1, 1.1) relative to the rail, the retainer (2) having a base body (8) into which a locking element (5.1, 5.2) is inserted.

14. Fastening device according to claim 13, **characterized in that** the retainer (2) can be guided vertically along the base element (1, 1.1).

15. Fastening device for fixing goods to be loaded in a cargo space, which fastening device comprises a base element (1, 1.1) which can be inserted into a rail (23.1, 23.2) and fixed in and/or on it, and a connecting element (3, 3.1, 3.2) to the goods to be loaded, a retainer (2) for locking the base element relative to the rail being assigned to the base element, the connecting element (3.2) having a gimbal-mounted movable head (20).

## Revendications

1. Procédé de fabrication et de transformation totalement variable d'un dispositif de fixation (P1, P2, P3) destiné à fixer des marchandises de chargement dans une soute, le dispositif de fixation étant fixé dans un rail (23.1, 23.2),
**caractérisé par le fait que**
- au moins un élément de retenue central (2) qui reste maintenu dans toutes les variantes,
- au moins un élément de base variable (1, 1.1) destiné à représenter la connexion au rail (23.1, 23.2), et
- au moins un élément de connexion variable (3, 3.1, 3.2) destiné à permettre le cas d'arrimage des marchandises de chargement,
sont assemblés selon différentes exigences.

2. Procédé selon la revendication 1, **caractérisé par le fait que** le moyen de fixation se compose de l'élément de base (1, 1.1) pouvant être placé dans le rail et pouvant être fixé dans et/ou à ce dernier, de l'élément de retenue (2) et de l'élément de connexion (3, 3.1, 3.2) aux marchandises de chargement, dans lequel est associé, à l'élément de base (1, 1.1), l'élément de retenue (2) pour verrouiller l'élément de base par rapport au rail.

3. Procédé selon la revendication 2, **caractérisé par le fait que** parmi une pluralité d'éléments de base (1, 1.1) et l'élément de retenue (2) qui sont prévus pour différents rails (23.1, 23.2) sont choisis ceux qui sont destinés au rail désiré et ensuite connectés à l'élément de connexion (3, 3.1, 3.2) entrant en considération pour les marchandises de chargement.

4. Procédé selon la revendication 2 ou 3, **caractérisé par le fait que** l'élément de retenue (2) consiste en un corps de base constant (8) dans lequel est placé un élément de verrouillage (5.1, 5.2) destiné au verrouillage de l'élément de base (1, 1.1) au rail.

5. Procédé selon au moins l'une des revendications 2 à 4, **caractérisé par le fait qu'**entre l'élément de retenue (2) et l'élément de connexion (3, 3.1, 3.2) est placé un accumulateur d'énergie (7).

6. Procédé selon au moins l'une des revendications 2 à 5, **caractérisé par le fait que** la connexion entre l'élément de connexion (3, 3.1, 3.2) et l'élément de base (1, 1.1) est réalisée à l'aide d'au moins une goupille (15.1, 15.2) ou autre.

7. Procédé selon la revendication 6, **caractérisé par le fait qu'**à la goupille (15.1, 15.2) est associé un marquage (17.1, 17.2).

8. Kit de construction pour la mise en oeuvre du procédé selon au moins l'une des revendications 1 à 7, **caractérisé par** une pluralité d'éléments de base (1, 1.1) différents et un élément de retenue (2) qui sont prévus pour des rails (23.1, 23.2) différents, ainsi qu'avec une pluralité d'éléments de connexion (3, 3.1, 3.2) différents pour différentes marchandises de chargement.

9. Dispositif de fixation pour fixer des marchandises de chargement dans une soute, qui se compose d'un élément de base (1, 1.1) pouvant être placé dans un rail (23.2, 23.2) et pouvant être fixé dans et/ou à ce dernier et d'un élément de connexion (3, 3.1,3.2) aux marchandises de chargement, dans lequel est associé, à l'élément de base, un élément de retenue (2) pour verrouiller l'élément de base (1, 1.1) par rapport au rail, dans lequel l'élément de base (1, 1.1) présente au moins deux, de préférence quatre, ouvertures coïncidentes (13.1 à 13.4) et l'élément de connexion (3, 3.1, 3.2) s'engage entre les au moins deux, de préférence quatre, ouvertures (13.1 à 13.4) et présente un passage (14.1, 14.2) connectant les ouvertures, dans lequel une goupille (15.1, 15.2) est introduite à travers les ouvertures et le passage.

10. Dispositif de fixation selon la revendication 9, **caractérisé par le fait que** de l'élément de base (1, 1.1) font saillie au moins deux, de préférence quatre, pattes (12.1 à 12.4) qui présentent les ouvertures (13.1 à 13.4) et entre lesquelles s'engage l'élément de connexion (3, 3.1, 3.2).

11. Dispositif de fixation selon la revendication 9 ou 10, **caractérisé par le fait que** la goupille (15.1, 15.2) présente une fente longitudinale.

12. Dispositif de fixation selon au moins l'une des revendications 9 à 11, **caractérisé par le fait que** la goupille (15.1, 15.2) est conçue comme un manchon et présente, à l'extrémité, une ouverture destinée à recevoir un marquage (17.1, 17.2).

13. Dispositif de fixation pour fixer des marchandises de chargement dans une soute, qui se compose d'un élément de base (1, 1.1) pouvant être placé dans un rail et pouvant être fixé dans et/ou à ce dernier et d'un élément de connexion (3, 3.1,3.2) aux marchandises de chargement, dans lequel est associé, à l'élément de base, un élément de retenue (2) pour verrouiller l'élément de base (1, 1.1) par rapport au rail, dans lequel l'élément de retenue (2) présente un corps de base (8) dans lequel est placé un élément de verrouillage (5.1, 5.2).

14. Dispositif de fixation selon la revendication 13, **caractérisé par le fait que** l'élément de retenue (2) peut être guidé verticalement le long de l'élément de base (1, 1.1).

15. Dispositif de fixation pour fixer des marchandises de chargement dans une soute, qui se compose d'un élément de base (1, 1.1) pouvant être placé dans un rail (23.1, 23.2) et pouvant être fixé dans ou à ce dernier et d'un élément de connexion (3, 3.1, 3, 2) aux marchandises de chargement, dans lequel est associé, à l'élément de base, un élément de retenue (2) pour verrouiller l'élément de base par rapport au rail, dans lequel l'élément de connexion (3.2) présente une tête mobile (20) à la cardan.
